# EUROPEAN PATENT SPECIFICATION

(11) **EP 2 842 203 B1**
(45) Date of publication and mention of the grant of the patent: **01.02.2017**
(21) Application number: 12791548.6
(22) Date of filing: 01.10.2012
(51) Int. Cl.: H02B 1/01

(54) **A METAL STRUCTURE WITH HEAVY DUTY CORNER ELEMENTS**
EINE METALLSTRUKTUR MIT SCHWEREN ECKELEMENTE
UNE STRUCTURE MÉTALLIQUE AVEC DES ÉLÉMENTS DE COIN ROBUSTES

(30) Priority: 10.07.2012 LK 1677012
(43) Date of publication of application: 04.03.2015
(73) Proprietor: Kahatapitiya Algama, Nadie, Nugegoda 10250 (LK)
(72) Inventor: Kahatapitiya Algama, Nadie, Nugegoda 10250 (LK)
(74) Representative: Hoarton, Lloyd Douglas Charles
(86) International application number: PCT/IB2012/055242
(87) International publication number: WO 2013/072788

(56) References cited:
- WO-A1-2012/052969
- DE-C1- 19 511 349
- DE-U1-202010 000 660

## Description

This invention relates to a metal structure embodiment connected utilizing screws and with the aid of heavy duty axial corner modules for each corner. It has adjustable structural members that could be placed at various points as required.

Throughout history, many similar inventions have been identified. However, a solution with increased mechanical strength and user friendliness such as this brings in many advantages especially in the field of manufacturing electrical panel boards, cabinets for electronic, pneumatic and pneumatic hydraulic control apparatus or for equipment that for some reason or the other has to be mounted and/or enclosed.

WO 2012/052969 discloses a three dimensional structure or a framework which can be use as the base for an enclosure to house electrical equipment or other related peripherals.

DE 20 2010 000 660 U1 discloses a kit for the modular construction of cabinets, in particular cabinets for accommodating electrical equipment, formed by metallic corner joints connected to a hollow supporting frame.

The present invention provides a metal structure as claimed.

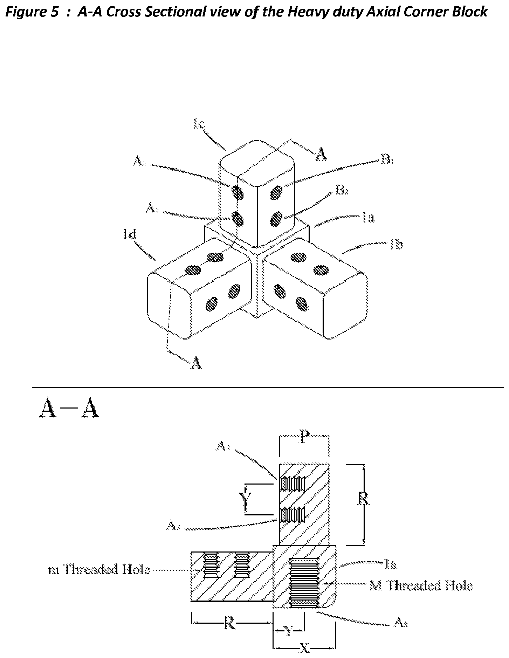

The most important elements in this embodiment would be the structural members, corner modules and the strongly adjustable structural members. The significance in this design is given to the heavy duty axial corner module. The three block shaped protrusions (1b, 1c, 1d) in the corner module enter firmly into the 3D structural members which strengthen the edges whilst giving immense strength to the entire structure. There are four "m" mm threaded holes (A₁, A₂, B₁, B₂) in each rectangular block shaped protrusion (1b, 1c, 1d) and a "M" mm threaded hole (A₃) in the base cube of the corner module as shown in figure 5.

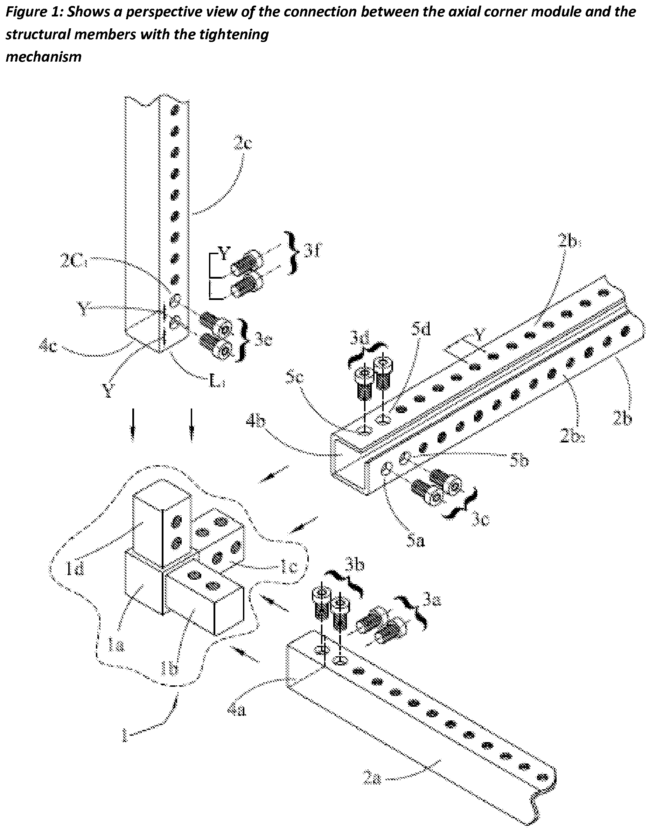

Corner module (1) is a one piece monolithic element that has three rectangular block shaped protrusions (1b, 1c and 1d) extending outwardly from three adjoining faces of the base cube 1a. The rectangular block shaped protrusions (1b or 1c or 1d) of a corner module (1a) have the same general cross sectional configurations or shape as the cross sectional opening (4a, 4b and 4c) of the structural members but of a slightly smaller size, so as to be slidably inserted into the end portion of the structural members. The hollow structural members (2a, 2b and 2c) are inserted into the three rectangular block shaped protrusions (1b1lc and 1d) utilizing pairs of screws (3a, 3b, 3c, 3d, 3e and 3f). The structural members have threaded holes to facilitate the fixing of adjustable structural members. "Y" is the distance between threaded holes and also between the pair of screws as shown in the figure 1. The distance from L₁ to 2C₁ would be maintained as 2Y. The four holes on each structural member for example 5a, 5b, 5c and 5d of structural member 2b and likewise for 2a and 2c are all non-threaded holes as the holes in the axial corner module have threaded holes.

Ease of assembly in this framework is of significance as even by the use of an Allan key the screws can be fitted with least effort increasing labor efficiency.

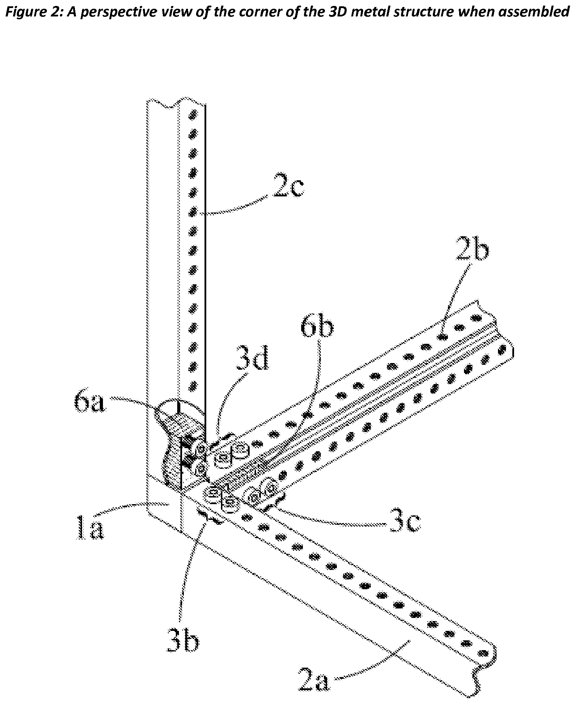

Once the rectangular block shaped protrusions are fitted with the structural members, it would be displayed as in Figure 2. The slid axial protrusions of the corner module are shown in 6a and 6b likewise for the 2a structural member as well.

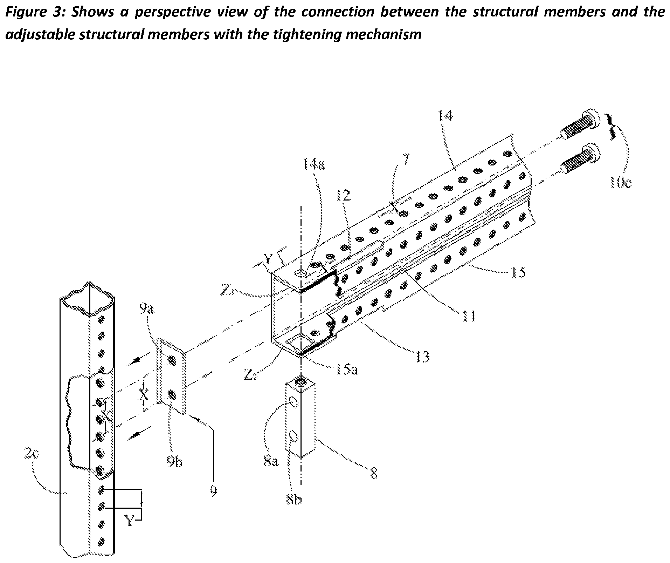

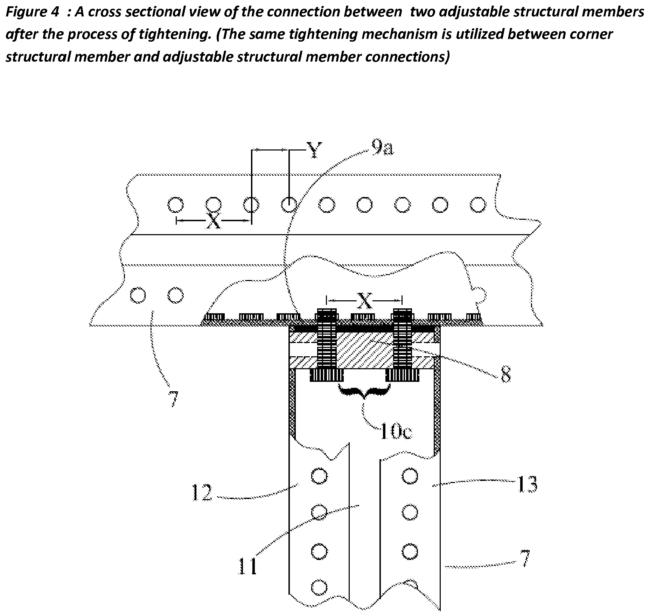

The adjustable structural member (7) can be positioned via the threaded holes in the structural member 2C at any location (this could also be another adjustable structural member) as in figure 3.

For the tightening mechanism a rectangular metal block (8) with a square cross section and a plastic strip (9) (especially used to safeguard IP ratings - the design can strongly support up to IP 54) are used. Utilizing the rectangular metal block ensures that it stays stagnant once inserted through the square opening (15a). Initially, the rectangular metal block (8) is inserted through the square opening (15a) and then reverted at 14a. The plastic strip (9) is then kept at the required location on 2c and then the adjustable structural member is attached to that location and screwed utilizing the 10c screws via the provisions 12, 13 or 11 in such a way that 8a and 9a would be screwed together and 8b with 9b likewise. This order sequence in the process would greatly aid ease of assembly. A distance of X is maintained between the holes 8a and 8b on the rectangular metal block and 9a and 9b on the plastic strip.

As shown in figure 3, on plane 14 the first opening (14a) would be at a distance Y from Z₁. Likewise, on plane 15 the first opening (15a) would be at a Y distance to the centre of the square opening from Z₂. However, on both planes 14 and 15, the distance between threaded holes is maintained as Y similar to the structural members.

Figure 5 depicts an A-A cross sectional view of the corner module. A₁ and A₂ threaded holes are placed at a Y distance and the threaded holes are "m" mm in diameter. The rectangular block shaped protrusions are of distance from the (1a) base cube. The width of 1b, 1c and 1d are given as P.P is slightly smaller than the inside dimensions of 4a, 4b and 4c (in figure 1) to slide into the structural members. A₃ threaded hole is "M" mm in diameter and is significant in terms of either the heavy lifting or the tightening to the base plinth.

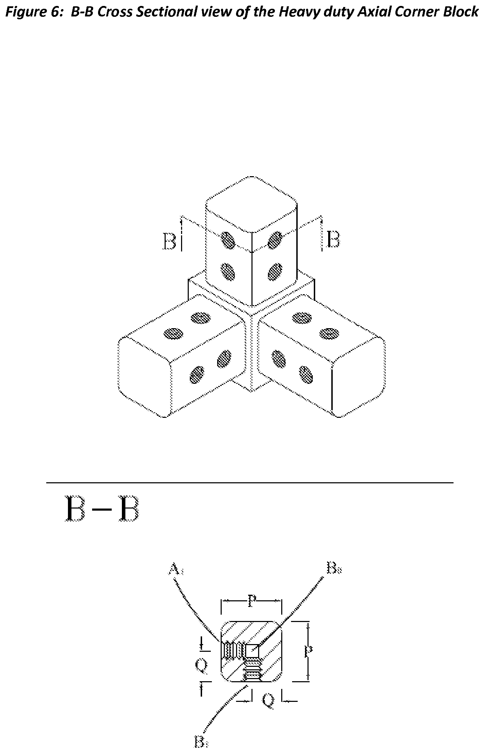

Figure 6 depicts the B-B cross sectional view of the corner module. The screws through A₁ and B₁ would finally be placed after being tightened with a B₀ spacing in-between in the 1b axial leg as shown in the figure. The screws would be at a Q distance from the edge where Q= P/2

The metal structure almost ready to be assembled has four lifting hooks each "M" mm sized (16, 17, 18 and 19) which has a bearing capacity up to 4000Kg's. The bottom plinth 20 is fixed to the metal structure via "M" mm bolts at 4 places (21, 22, 23 and 24)

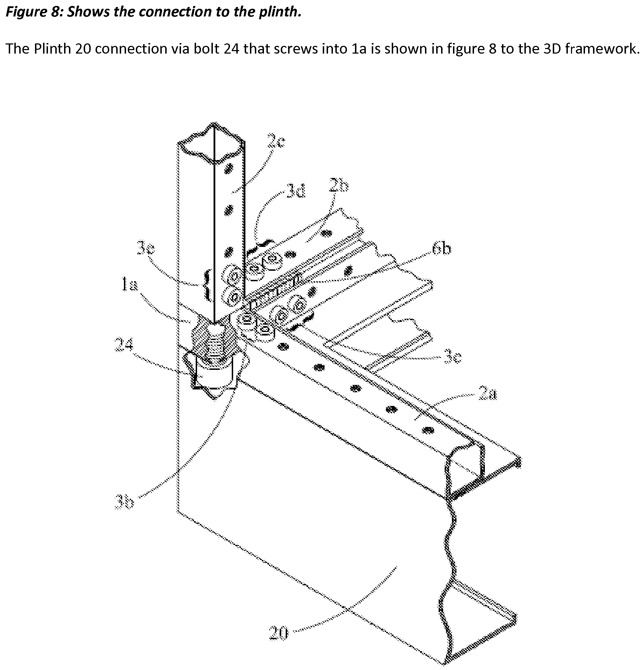

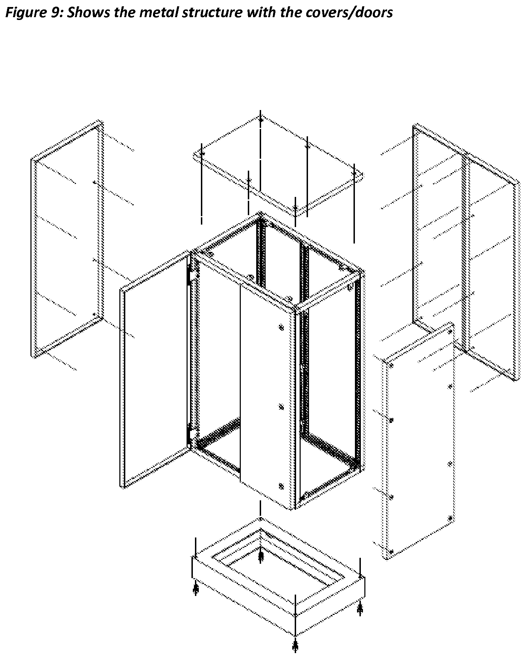

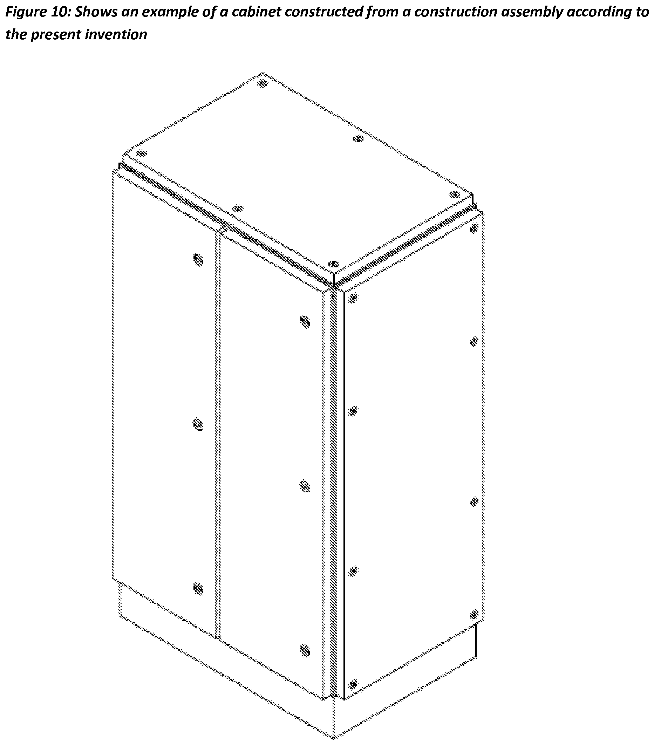

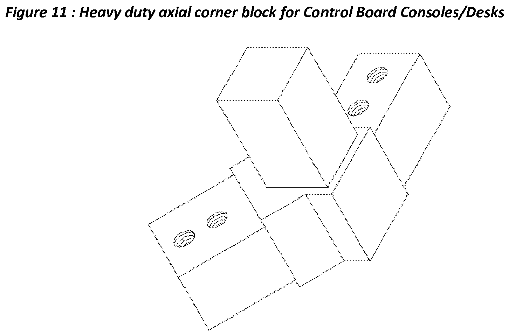

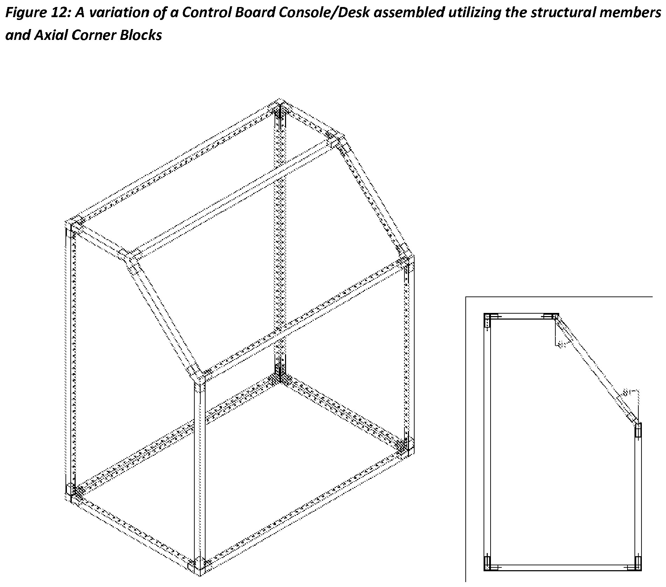

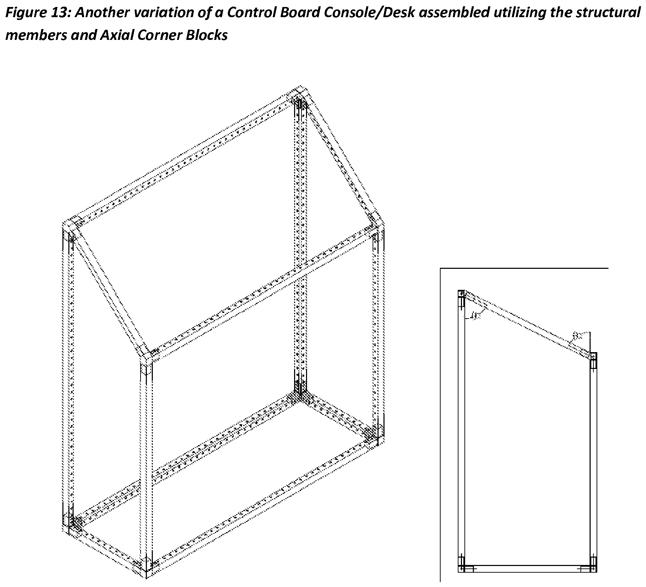

The Plinth 20 connection via bolt 24 that screws into 1a is shown in figure 8 to the framework.

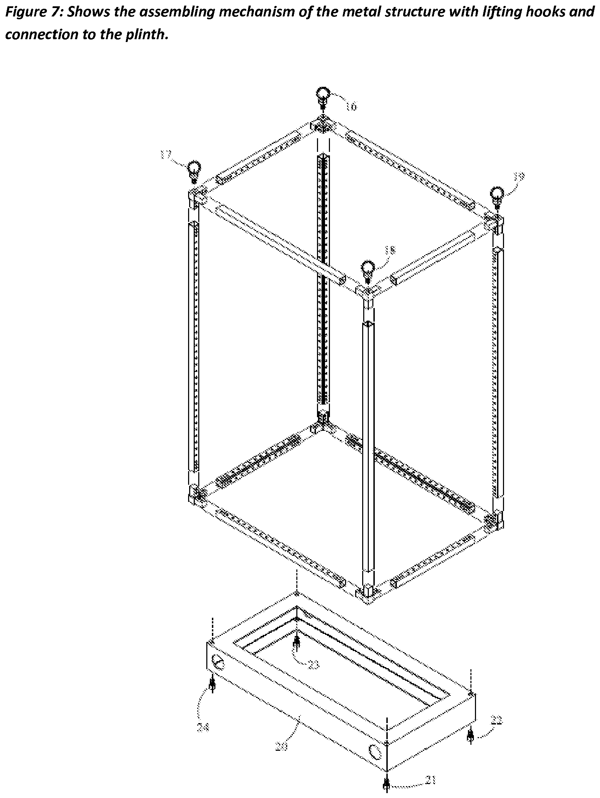

Due to the mechanism of this corner module it is possible to lift up to 4000 Kg's on all 4 hooks on the corner modules shown in figure 7. The hooks can be screwed straight into the corner module with no additional accessories and no additional drilling of the structure.

The significance of this design includes the extension of the corner module design in which the rectangular block shape protrusions can be designed to take a "Θ" angle to support the making of Control Board Consoles/Desks and such similar designs. This eliminates the restriction of the design angle to be 90 degrees at all times.

## Claims

1. A metal structure, comprising:
a plurality of hollow structural members (2a, 2b, 2c), each structural member having two inner planes (2b₁, 2b₂) each with two non-threaded holes (5a, 5b, 5c, 5d) at both ends and a plurality of threaded holes arranged in between said non-threaded holes (5a, 5b, 5c, 5d), said holes positioned at a distance "Y";
a plurality of die-cast heavy duty corner modules (1), each corner module comprising a base cube (1a), the base cube having an "M" threaded hole (A₃) and three rectangular block shaped protrusions (1 b, 1 c, 1 d) extending outwardly from three adjoining faces of the base cube, each rectangular block-shaped protrusion (1 b, 1 c, 1 d) having two threaded holes in each inner wall of the protrusion, wherein said holes are positioned at a distance "Y", wherein said protrusions are configured to receive the end portion of the structural members (2a, 2b, 2c), such that the structural member (2a, 2b, 2c) is slidably insertable to the protrusion and fixable together with the use of screws (3a-3f), that pass through the non-threaded holes (5a, 5b, 5c, 5d) in the inner planes (2b₁, 2b₂) of the structural members (2a, 2b, 2c);
a plurality of hollow adjustable structural members (7), each adjustable structural member having one square opening (15a) at the end portion of one plane (15) thereof and a circular opening (14a) at the end portion of the opposite plane (14) thereof; and
a plurality of rectangular metal blocks (8), each rectangular metal block having a circular edge and two non-threaded holes (8a, 8b) on opposite walls thereof, wherein said holes are positioned at a distance "X=2Y" and said rectangular metal block (8) is configured to facilitate the fixing of one of the adjustable structural members (7) to the structural member (2a, 2b, 2c) or another adjustable structural member (7).

2. The metal structure of claim 1 wherein the adjustable structural member (7) is connected to the structural member (2a, 2b, 2c) or another adjustable structural member (7) using the rectangular metal block and a plastic strip for the tightening mechanism.

3. The metal structure of any preceding claim, wherein the heavy duty corner module (1) further comprises four lifting hooks (16, 17, 18, 19), each "M" mm in size.

4. Use of the metal structure of any preceding claim for making enclosures for housing electrical and/or electronic assemblies, switchboards, panel boards, control consoles or desks.

## Patentansprüche

1. Metallstruktur, umfassend:
Eine Vielzahl von hohlen Strukturelementen (2a, 2b, 2c), wobei jedes Strukturelement zwei innere Ebenen (2b₁, 2b₂) jede mit zwei Löchern (5a, 5b, 5c, 5d) ohne Gewinde an beiden Enden aufweist und eine Vielzahl mit Gewinde versehener Löcher zwischen den Löchern (5a, 5b, 5c, 5d) ohne Gewinde angeordnet ist, wobei die Löcher mit einer Distanz "Y" positioniert sind;
eine Vielzahl von schweren Druckguss-Eckmodulen (1), wobei jedes Eckmodul einen Basiswürfel (1a) umfasst, der Basiswürfel ein "M" Gewindeloch (A₃) und drei rechteckige blockförmige Vorsprünge (1 b, 1 c, 1 d) aufweist, die sich ab drei an grenzenden Flächen des Basiswürfels nach außen erstrecken, jeder rechteckige blockförmige Vorsprung (1 b, 1 c, 1 d) zwei mit Gewinde versehene Löcher in jeder Innenwand des Vorsprungs aufweist, wobei die Löcher mit einer Distanz "Y" positioniert sind, wobei die Vorsprünge konfiguriert sind, den Endabschnitt der Strukturelemente (2a, 2b, 2c) aufzunehmen, derart, dass das Strukturelement (2a, 2b, 2c) verschiebbar einsetzbar zum Vorsprung ist und unter Verwendung von Schrauben (3a-3f) miteinander fixierbar ist, die durch die Löcher ohne Gewinde (5a, 5b, 5c, 5d) in die inneren Ebenen (2b₁, 2b₂) der Strukturelemente (2a, 2b, 2c) hindurch gehen;
eine Vielzahl von hohlen einstellbaren Strukturelementen (7), wobei jedes einstellbare Strukturelement eine viereckige Öffnung (15a) am Endabschnitt einer Ebene (15) davon und eine runde Öffnung (14a) am Endabschnitt der entgegengesetzten Ebene (14) davon aufweist; und
eine Vielzahl rechteckiger Metallblöcke (8), wobei jeder rechteckige Metallblock einen runden Rand und zwei Löcher ohne Gewinde (8a, 8b) an entgegengesetzten Wänden davon aufweist, wobei die Löcher mit einer Distanz "X=2Y" positioniert sind und der rechteckige Metallblock (8) konfiguriert ist, das Befestigen eines der einstellbaren Strukturelemente (7) an das Strukturelement (2a, 2b, 2c) oder ein weiteres Strukturelement (7) zu erleichtern.

2. Metallstruktur nach Anspruch 1 wobei das einstellbare Strukturelement (7) mit dem Strukturelement (2a, 2b, 2c) oder einem weiteren einstellbaren Strukturelement (7) unter Verwendung des rechteckigen Metallblocks und einem Kunststoffstreifen für den Spannmechanismus verbunden wird.

3. Metallstruktur nach einem vorhergehenden Anspruch, wobei das schwere Eckmodul (1) ferner vier Hebehaken (16, 17, 18, 19), jeder "M" mm in Größe, umfasst.

4. Verwendung der Metallstruktur nach einem vorhergehenden Anspruch zur Herstellung von Gehäusen zur Unterbringung elektrischer und/oder elektronischer Baugruppen, Schalttafeln, Installationsverteilern, Steuerkonsolen oder Schaltpulten.

## Revendications

1. Structure métallique, comprenant :
une pluralité d'éléments structurels creux (2a, 2b, 2c), chaque élément structurel ayant deux plans intérieurs (2b₁, 2b₂) avec chacun deux trous non filetés (5a, 5b, 5c, 5d) aux deux extrémités et une pluralité de trous filetés disposés entre lesdits trous non filetés (5a, 5b, 5c, 5d), lesdits trous étant positionnés à une distance « Y » ;
une pluralité de modules de coin robustes moulés sous pression (1), chaque module de coin comprenant un cube de base (1a), le cube de base ayant un trou fileté « M » (A₃) et trois protubérances en forme de bloc rectangulaire (1 b, 1 c, 1 d) s'étendant vers l'extérieur à partir des trois faces adjacentes du cube de base, chaque protubérance en forme de bloc rectangulaire (1 b, 1 c, 1 d) ayant deux trous taraudés dans chaque paroi intérieure de la protubérance, lesdits trous étant positionnés à une distance « Y », lesdites protubérances étant conçues pour recevoir l'extrémité des éléments structurels (2a, 2b, 2c), de telle sorte que l'élément structurel (2a, 2b, 2c) puisse être inséré de manière coulissante vers la protubérance et puisse y être fixé au moyen de vis (3a-3f) qui passent à travers les trous non filetés (5a, 5b, 5c, 5d) dans les plans intérieurs (2b₁, 2b₂) des éléments structurels (2a, 2b, 2c) ;
une pluralité d'éléments structurels creux réglables (7), chaque élément structurel réglable ayant une ouverture carrée (15a) à l'extrémité d'un plan (15) correspondant et une ouverture circulaire (14a) à l'extrémité du plan opposé (14) correspondant ; et
une pluralité de blocs métalliques rectangulaires (8), chaque bloc métallique rectangulaire ayant un bord circulaire et deux trous non filetés (8a, 8b) sur des parois opposées correspondantes, lesdits trous étant positionnés à une distance « X=2Y », et ledit bloc métallique rectangulaire (8) étant conçu pour faciliter la fixation d'un des éléments structurels réglables (7) à l'élément structurel (2a, 2b, 2c) ou à un autre élément structurel réglable (7).

2. Structure métallique selon la revendication 1, dans laquelle l'élément structurel réglable (7) est connecté à l'élément structurel (2a, 2b, 2c) ou à un autre élément structurel réglable (7) au moyen du bloc métallique rectangulaire et d'une bande plastique pour le mécanisme de serrage.

3. Structure métallique selon l'une quelconque des revendications précédentes, dans laquelle le module de coin robuste (1) comprend en outre quatre crochets de levage (16, 17, 18, 19), ayant chacun une taille de « M » mm.

4. Utilisation de la structure métallique selon l'une quelconque des revendications précédentes afin de fabriquer des enceintes pour y loger des ensembles, des cartes, des panneaux de commande, des consoles de commande ou des pupitres électriques et/ou électroniques.
